# EUROPÄISCHE PATENTSCHRIFT

(11) **EP 3 033 247 B1**
(45) Veröffentlichungstag und Bekanntmachung des Hinweises auf die Patenterteilung: **12.02.2020**
(21) Anmeldenummer: 14755040.4
(22) Anmeldetag: 07.08.2014
(51) Int. Cl.: B60N 2/06, B60N 2/12, B60N 2/07, B60N 2/30

(54) **EASY-ENTRY-VERSTELLMECHANISMUS FÜR DIVE-DOWN-FAHRZEUGSITZE BEZIEHUNGSWEISE SITZANLAGEN**
EASY-ENTRY ADJUSTMENT MECHANISM FOR DIVE-DOWN VEHICLE SEATS OR SEAT SYSTEMS
MÉCANISME DE DÉPLACEMENT EASY-ENTRY POUR SIÈGE DE VÉHICULE RABATTABLE OU SYSTÈMES DE SIÈGE

(30) Priorität: 14.08.2013 DE 102013012284
(43) Veröffentlichungstag der Anmeldung: 22.06.2016
(73) Patentinhaber: Volkswagen Aktiengesellschaft, 38440 Wolfsburg (DE)
(72) Erfinder: SZLAG, Robert, 38440 Wolfsburg (DE)
(86) Internationale Anmeldenummer: PCT/EP2014/066965
(87) Internationale Veröffentlichungsnummer: WO 2015/022257

(56) Entgegenhaltungen:
- WO-A1-01/03968
- DE-A1-102011 107 226
- DE-U1-202009 006 984

## Beschreibung

Die Erfindung betrifft einen Fahrzeugsitz oder den Fahrzeugsitz innerhalb einer mehrteiligen Sitzbank mit einem Easy-Entry-Verstellmechanismus oder eine ungeteilte Sitzbank mit einem Easy-Entry-Verstellmechanismus.

Die Druckschrift DE 10 2008 050 468 B3 (US 2010/0084903 A1) offenbart einen Fahrzeugsitz, der aus einer zur Personenbeförderung geeigneten Gebrauchsstellung in wenigstens eine vorgeschwenkte Nichtgebrauchsstellung überführbar ist. Der Fahrzeugsitz umfasst eine Basis und wenigstens eine Schwinge, die wenigstens mittelbar an der Basis, insbesondere an einem an der Basis angebrachten vorderen Fuß angelenkt ist. Ferner ist ein Sitzkissen angeordnet, das an der Schwinge angelenkt ist. Zudem ist wenigstens ein Lenker ausgebildet, der wenigstens mittelbar an der Basis, insbesondere an dem an der Basis angebrachten vorderen Fuß angelenkt ist. Der Fahrzeugsitz umfasst ferner einen hinteren Fuß, der ebenfalls an dem wenigstens einen Lenker angelenkt ist und mit der Basis lösbar verriegelt ist. Eine Rückenlehne ist um eine Lehnenschwenkachse schwenkbar am hinteren Fuß angelenkt. Das Sitzkissen ist mittels eines Gelenks unmittelbar an der Lehne angelenkt.

Die durch mehrere Gelenke geschaffene gelenkige Verbindung zwischen dem hinteren Fuß und der Basis, vorzugsweise unter Bildung eines Viergelenks, erlaubt im Vergleich zu einer unmittelbaren Anlenkung des hinteren Fußes an der Basis eine bessere Ausnutzung des Schwenkwinkelbereichs bei kürzeren Schwenkarmen.

Die jüngere Druckschrift DE 10 2007 036 450 beschreibt schwerpunktmäßig einen ähnlich aufgebauten Fahrzeugsitz mit einer zwangsläufigen Schienenentriegelung. Der Fahrzeugsitz umfasst ebenfalls ein Sitzschienenpaar, mittels dessen die Sitzlängsposition einstellbar ist und welches mittels einer Schienenverriegelung verriegelbar ist. Sie beschreibt den wenigstens einen am Sitzschienenpaar angebrachten vorderen Fuß und das Sitzkissen, welches wenigstens mittelbar am Sitzschienenpaar angelenkt ist, insbesondere mittels wenigstens einer vorderen Schwinge am vorderen Fuß angelenkt ist, und im Unterschied zur Druckschrift DE 10 2008 050 468 B3 wenigstens einen mit dem Sitzschienenpaar lösbar verbindbaren hinteren Fuß, welcher mittels wenigstens eines Lenkers wenigstens mittelbar am Sitzschienenpaar angelenkt ist, insbesondere am vorderen Fuß angelenkt ist, und einer am hinteren Fuß angelenkten Lehne. Der Fahrzeugsitz, der zumindest von der wenigstens einen zur Personenbeförderung geeigneten Gebrauchsstellung in wenigstens eine Nichtgebrauchsstellung überführbar ist, entriegelt die Schienenentriegelung beim Übergang von der Gebrauchsstellung in die Nichtgebrauchsstellung wenigstens eines der sich dabei bewegenden Bauteile zwangsläufig.

Eine weitere kinematische Lösung zur Klappung eines Fahrzeugsitzes von einer zur Personenbeförderung geeigneten Gebrauchsposition in eine nicht zur Personenbeförderung geeigneten Ladeposition erläutert die Druckschrift DE 10 2007 053 963 A1. Bei diesem Fahrzeugsitz wird mittels Drehgelenken ein Viergelenkmechanismus gebildet. Der Fahrzeugsitz umfasst eine Rückenlehne, ein Sitzteil, eine Bodenkonsole und einen Gelenkarm, wobei die Rückenlehne mit der Bodenkonsole ein erstes Drehgelenk, die Bodenkonsole mit dem Gelenkarm ein weiteres zweites Drehgelenk, der Gelenkarm mit dem Sitzteil ein weiteres drittes Drehgelenk und das Sitzteil mit der Rückenlehne ein weiteres viertes Drehgelenk derart aufweisen, dass das Sitzteil, die Bodenkonsole, der Gelenkarm und ein Teilbereich der Rückenlehne, welcher durch das erste und das vierte Drehgelenk begrenzt wird, den Viergelenkmechanismus bilden.

Die Druckschrift DE 11 2008 003 251 T5 (US 2010/0244524 A1) offenbart einen Fahrzeugsitz mit einer Abwärtsneigungsfunktion zum Absenken eines Sitzkissens in Verbindung mit einer Weitest-Neigungsbewegung, bei der eine Rückenlehne vorwärts abwärts geneigt wird, und mit einer Einstiegsfunktion zum Einrichten unter einer bestimmten Bedingung, bei der ein Sitzkörper in Bezug auf einen Fahrzeugboden in Verbindung mit einer Halb-Neigungsbewegung, bei der die Rückenlehne an eine vorwärts gekippte Position geneigt wird, vorwärts gleitet.

Ferner ist ein Beispiel eines weiteren Fahrzeugsitzes aus der Druckschrift DE 20 2009 006 984 U1 bekannt, bei dem der Fahrzeugsitz von wenigstens einer zum Sitzgebrauch geeigneten Gebrauchsstellung in eine Einstiegsstellung zum erleichterten Einstieg überführbar ist, in dem eine Lehne nach vorne schwenkt, ein Sitzrahmen relativ zur zweiten Sitzschiene schwenkt, und die Sitzschiene den Fahrzeugsitz in eine vordere Sitzlängsposition bringt. Ferner ist der Fahrzeugsitz von der Einstiegsstellung in die Gebrauchsstellung überführbar, in dem die Lehne nach hinten schwenkt, der Sitzrahmen relativ zu einer zweiten Sitzschiene schwenkt und die Sitzschiene den Fahrzeugsitz in eine hintere Längsposition bringt. Für eine zumindest zeitweilige Kopplung (Zwangssteuerung) zwischen der Bewegung des Sitzrahmens und der zweiten Sitzschiene ist erfindungsgemäß ein Zugmittel vorgesehen.

Erwähnung findet noch ein Fahrzeugsitz, der es gemäß der Beschreibung in der Druckschrift DE 198 82 413 B4 mit einer einzigen Steuerungsvorrichtung ermöglicht, den Einfacheinstieg zusammen mit einem Absenken der Sitzgruppe optional zusammen mit einer unabhängigen Steuerung einer Sitzrückklappeinrichtung zu betätigen.

Abschließend wird auf die Druckschriften DE 102011 107 226 A1 und WO 01/03968 A1 verwiesen, die gattungsgemäße Fahrzeugsitze beziehungsweise Sitzanlagen offenbaren.

Die Funktion der Überführung eines Fahrzeugsitzes beziehungsweise aus mehreren Fahrzeugsitzen gebildeten Sitzanlagen von der zur Personenbeförderung geeigneten Gebrauchsposition in eine nicht zur Personenbeförderung geeigneten Position, insbesondere in eine Ladeposition, wird auch als "Dive-Down"-Funktion bezeichnet. Die zugehörigen Sitzanlagen werden analog dazu als "Dive-Down"-Sitzanlagen bezeichnet, weil sie platzsparend aus der Gebrauchsposition zur Personenbeförderung in eine Nichtgebrauchsposition abtauchen.

Die nachfolgend erläuterte Erfindung stellt einen verbesserten Fahrzeugsitz mit einem weiterentwickelten Verstellmechanismus dar.

Der Erfindung liegt die Aufgabe zugrunde, einen Fahrzeugsitz oder eine Sitzbank mit einem Fahrzeugsitz mit einem Verstellmechanismus mit einer Verstellkinematik zu schaffen, der/die für eine Person einen großen Einstiegsbereich beim Einsteigen in einen Innenraum eines Fahrzeuges, insbesondere in eine zweite und dritte Sitzreihe, ermöglicht.

Ausgangspunkt der Erfindung ist ein Fahrzeugsitz mit einem Easy-Entry-Verstellmechanismus oder der Fahrzeugsitz mit dem Easy-Entry-Verstellmechanismus innerhalb einer mehrteiligen Sitzbank oder eine ungeteilte Sitzbank mit dem Easy-Entry-Verstellmechanismus, insbesondere zum erleichterten Einstieg in einen Innenraum eines Kraftfahrzeuges, wobei das Rückenlehnenteil des Fahrzeugsitzes oder der Sitzbank zur Durchführung eines ersten Schrittes eine Rückenlehnenentriegelungseinheit aufweist, durch die das Rückenlehnenteil des Fahrzeugsitzes oder der Sitzbank entriegelbar ist und gegenüber dem Sitzteil des Fahrzeugsitzes oder der Sitzbank in eine vorgebbare dem Sitzteil näher kommende Klappstellung bringbar ist.

Es ist erfindungsgemäß vorgesehen, dass die Rückenlehnenentriegelungseinheit zur Durchführung eines zweiten Schrittes, bei dem eine erste Verstellbewegung des Fahrzeugsitzes oder der Sitzbank durchgeführt wird, in Klappstellung des Fahrzeugsitzes oder der Sitzbank entriegelnd auf eine Schlittenentriegelungseinheit eines den Fahrzeugsitz oder die Sitzbank tragenden Schlittens einwirkt, so dass der Fahrzeugsitz oder die Sitzbank durch den Schlitten um einen ersten Verstellweg horizontal verschoben und das Sitzteil über mindestens einen im vorderen Bereich des Sitzteiles angeordneten Schwenkarm innerhalb der ersten Verstellbewegung jeweils um einen vorgebbaren vertikalen Verstellweg vertikal nach unten bewegt wird, wobei der Schlitten anschließend auf eine Sitzschienenentriegelungseinheit einer den Schlitten tragenden Sitzschiene entriegelnd einwirkt, so dass der Fahrzeugsitz oder die Sitzbank auf der Sitzschiene in einem dritten Schritt nach der ersten Verstellbewegung in einer zweiten Verstellbewegung gleichgerichtet um einen weiteren horizontalen zweiten Verstellweg weiter bewegbar ist.

Der Verstellmechanismus zeichnet sich insbesondere in einer bevorzugten Ausgestaltung der Erfindung dadurch aus, dass die Verstellbewegung des Rückenlehnenteiles in dem ersten Schritt reversibel auf das Sitzteil übertragen wird, da zwischen dem Rückenlehnenteil und dem Sitzteil eine Zwangskopplung ausgebildet ist, die mittels einer Schwinge realisiert ist.

Diese Übertragung der Bewegung durch eine Schwinge stellt eine vorteilhafte und einfach zu realisierende Maßnahme dar, um eine Vorwärts- beziehungsweise Rückwärtsklappung des Rückenlehnenteiles auf das Sitzteil zu übertragen.

Um den entsprechenden Verstellmechanismus realisieren zu können, wird erfindungsgemäß ein Seitenteil ausgebildet, wobei sich das Rückenlehnenteil in bevorzugter Ausgestaltung der Erfindung über einen das Rückenlehnenteil mit dem Seitenteil verbindenden Beschlag über das Seitenteil auf dem Schlitten abstützt.

Die Ausbildung beziehungsweise Anordnung des Seitenteiles stellt eine einfache und vorteilhafte Maßnahme dar, um die Rückenlehne mit der Unterkonstruktion des Fahrzeugsitzes, das heißt mit dem Schlitten und der unter dem Schlitten angeordneten Sitzschiene zu verbinden. Das Seitenteil dient somit als konstruktives Bauteil, um das Rückenlehnenteil mit der Sitzunterkonstruktion zu verbinden. Das Seitenteil trägt in vorteilhafter Weise das Rückenlehnenteil und den hinteren Bereich des Sitzteiles, da das Sitzteil im hinteren Bereich nicht mit der Sitzunterkonstruktion verbunden ist, da die Verbindung zwischen Sitzteil und Rückenlehnenteil durch die Schwinge realisiert ist.

In weiterer bevorzugter Ausgestaltung der Erfindung ist an dem Seitenteil auf einer Kupplungslagerachse drehbar eine Kupplungsplatte angeordnet. Diese Kupplungsplatte bewirkt in dem ersten Schritt durch Betätigung eines Easy-Entry-Entriegelungselementes über einen Bowdenzug eine Entriegelung des Rückenlehnenteiles über eine Entriegelungseinheit. Nach Entriegelung ist das Rückenlehnenteil in die Klappstellung bringbar. Dabei wird die Kupplungsplatte des Rückenlehnenteiles mittels eines Kulissenelementes, welches in eine erste Kulisse des rückenlehnenseitigen Beschlagteiles eingreift, geführt und gesichert. Ferner sorgt die Kupplungsplatte mittels eines zweiten Kulissenelementes, welches in eine zweite Kulisse eingreift, hinsichtlich des vorgebbaren Schwenkwinkels des Rückenlehnenteiles für eine Begrenzung der Schwenkbewegung, worauf in der Beschreibung noch näher eingegangen wird.

Die Anordnung der Kupplungsplatte stellt in vorteilhafter Weise eine einfache Möglichkeit zur Übertragung von Bewegungsabläufen innerhalb des Verstellmechanismus dar.

Zudem ist in vorteilhafter Weise ein einteiliges oder mehrteiliges Stößelelement angeordnet, welches bei Erreichen der Klappstellung des Rückenlehnenteiles nach dem ersten Schritt von einem an dem Rückenlehnenteil angeordneten Übertragungselement derart verlagert wird, dass das Stößelelement ein Sperrelement einer Schlittenentriegelungseinheit entriegelt. Durch diese Entriegelung ist ein Oberschlitten gegenüber einem Unterschlitten in dem zweiten Schritt um den ersten Verstellweg verfahrbar und der Fahrzeugsitz/die Sitzbank ist horizontal verschiebbar.

Bei dieser Verschiebung über den ersten Verstellweg findet gleichzeitig eine Absenkung des Sitzteiles statt. Bereits durch diese überlagerten Verstellbewegungen in x-Richtung und y-Richtung wird in vorteilhafter Weise ein vergrößerter Einstiegsraum zum Einstieg in den Innenraum eines Kraftfahrzeuges erzeugt. Zur Realisierung dieser überlagerten Verstellbewegungen wurde das Sitzteil nahe des vorderen Bereiches des Sitzteiles über die Schwenkarme drehbar auf der Sitzoberschiene der Sitzschiene angekoppelt. Die Ankopplung des Sitzteiles im hinteren Bereich an das Rückenlehnenteil über die Schwinge wurde bereits erläutert.

Diese Ankopplung mittels der Schwinge ermöglicht, wie bereits erläutert, in dem ersten Schritt die Übertragung der Verstellbewegung des Rückenlehnenteiles auf das Sitzteil.

Schließlich zeichnet sich der Verstellmechanismus dadurch aus, dass im vorderen Bereich der Sitzschiene ein Entriegelungselement angeordnet ist, welches mittelbar oder unmittelbar an einem Entriegelungsbügel einer Sitzschienenentriegelungseinheit angreift. Im Wesentlichen am Ende der zweiten horizontalen Verstellbewegung stößt der Oberschlitten in seiner im Wesentlichen vordersten Position an dem Entriegelungselement an. Diese technische Maßnahme stellt eine einfache und sichere Entriegelung der Sitzoberschiene gegenüber der Sitzunterschiene dar. Durch das Anstoßen des Oberschlittens an dem Entriegelungselement erfolgt eine Betätigung des Entriegelungsbügels und somit eine Entriegelung der Sitzoberschiene gegenüber der Sitzunterschiene. Da die Sitzoberschiene den Unterschlitten trägt, wird der Fahrzeugsitz in vorteilhafter Weise über die sich gegenüber der Sitzunterschiene verlagernde Sitzoberschiene in dem dritten Schritt um den zweiten Verstellweg noch weiter nach vorne verfahren, so dass der Fahrzeugsitz/die Sitzbank ein weiteres Mal horizontal weiter in x-Richtung verschiebbar ist.

Dadurch wird in vorteilhafter Weise ein noch weiterer vergrößerter Einstiegsraum zum Einstieg in den Innenraum eines Kraftfahrzeuges erzeugt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: einen Fahrzeugsitz in einer Seitenansicht in Ausgangslage;
- Figur 2: den Fahrzeugsitz mit einer Easy-Entry-Klappung des Rückenlehnenteiles nach einem ersten Schritt innerhalb der Easy-Entry-Klappung;
- Figur 3-1: den Fahrzeugsitz in Ausgangslage gemäß Figur 1 in einer sequenziellen Figurenfolge zur Verdeutlichung der erfindungsgemäßen Easy-Entry-Verstellkinematik;

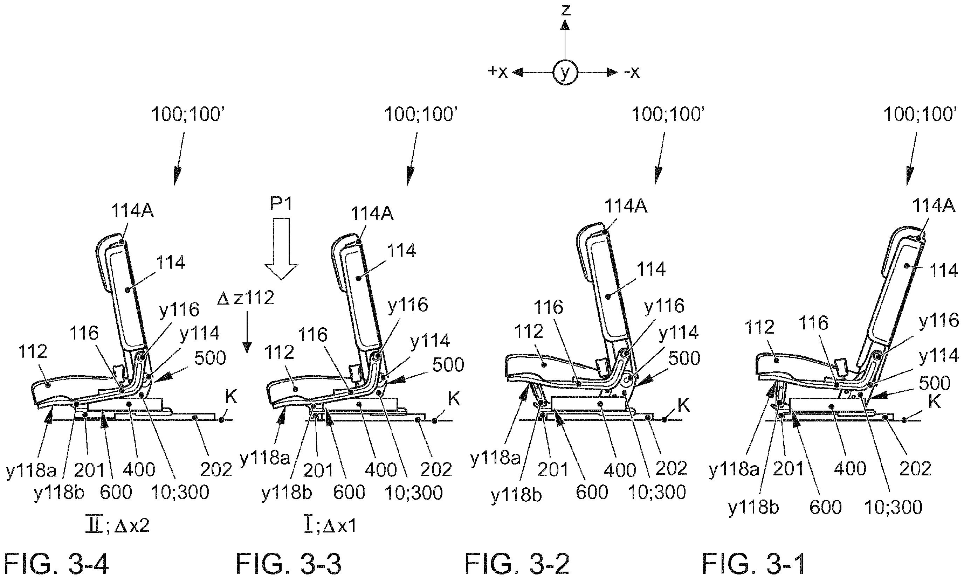

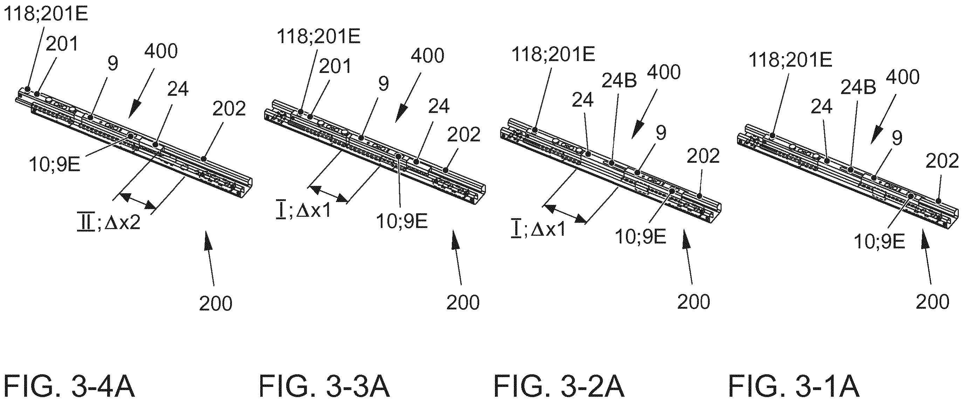

- Figur 3-1A: eine zugehörige Sitzschiene und ein zugehöriger Schlitten in ihrer Ausgangslage gemäß Figur 3-1;

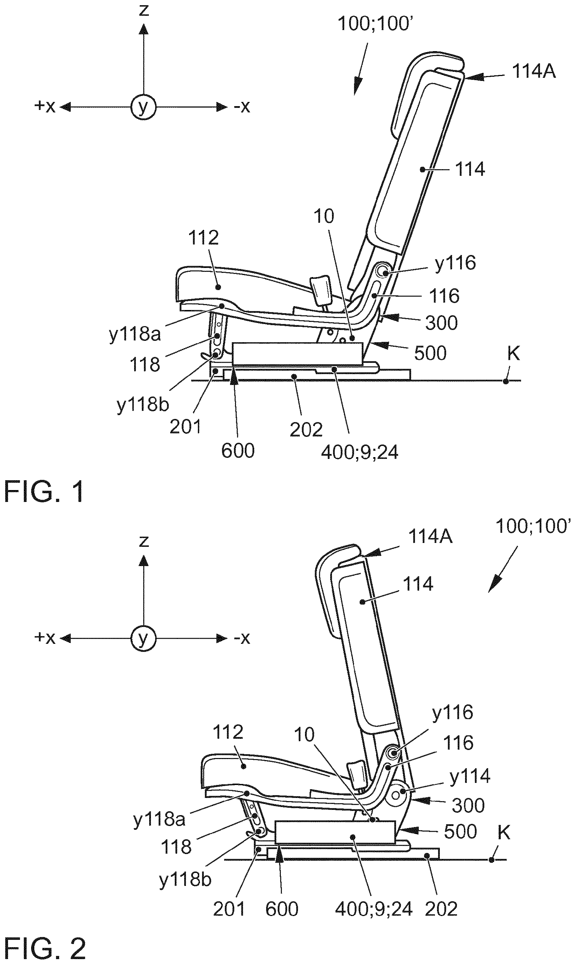

- Figur 3-2: den Fahrzeugsitz mit einer Easy-Entry-Klappung des Rückenlehnenteiles gemäß Figur 2 in der sequenziellen Figurenfolge zur Verdeutlichung der erfindungsgemäßen Easy-Entry-Verstellkinematik;
- Figur 3-2A: die zugehörige Sitzschiene und der zugehörige Schlitten in ihrer Lage gemäß Figur 3-2;
- Figur 3-3: den Fahrzeugsitz nach einer ersten Verstellbewegung des Fahrzeugsitzes in der sequenziellen Figurenfolge zur Verdeutlichung der erfindungsgemäßen Easy-Entry-Verstellkinematik;
- Figur 3-3A: die zugehörige Sitzschiene und der zugehörige Schlitten in ihrer Lage nach der ersten Verstellbewegung gemäß Figur 3-3;
- Figur 3-4: den Fahrzeugsitz nach einer zweiten Verstellbewegung des Fahrzeugsitzes in der sequenziellen Figurenfolge zur Verdeutlichung der erfindungsgemäßen Easy-Entry-Verstellkinematik;
- Figur 3-4A: die zugehörige Sitzschiene und der zugehörige Schlitten in ihrer Lage nach der zweiten Verstellbewegung gemäß Figur 3-4;

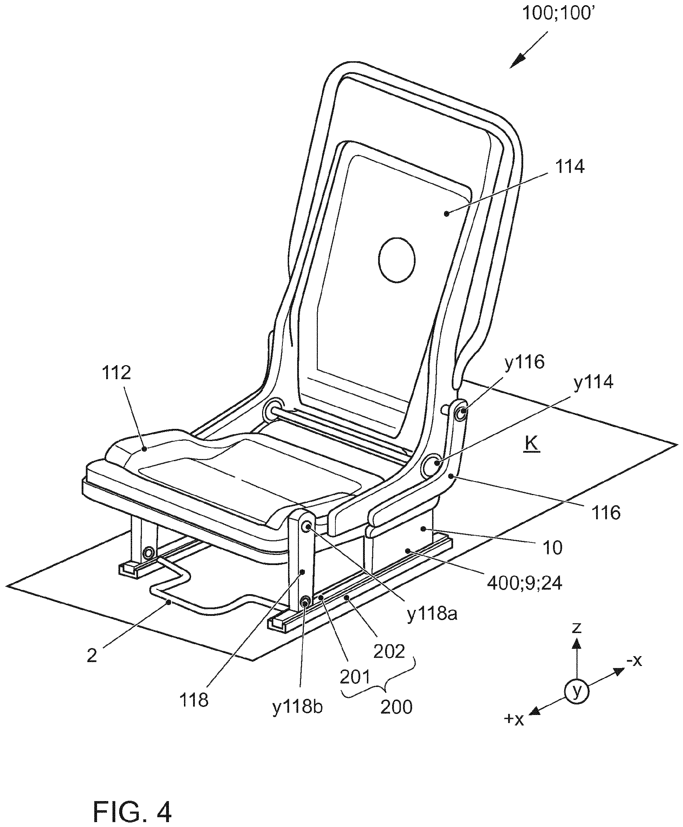

- Figur 4: den Fahrzeugsitz gemäß Figur 1 beziehungsweise Figur 3-1 in einer isometrischen Darstellung;

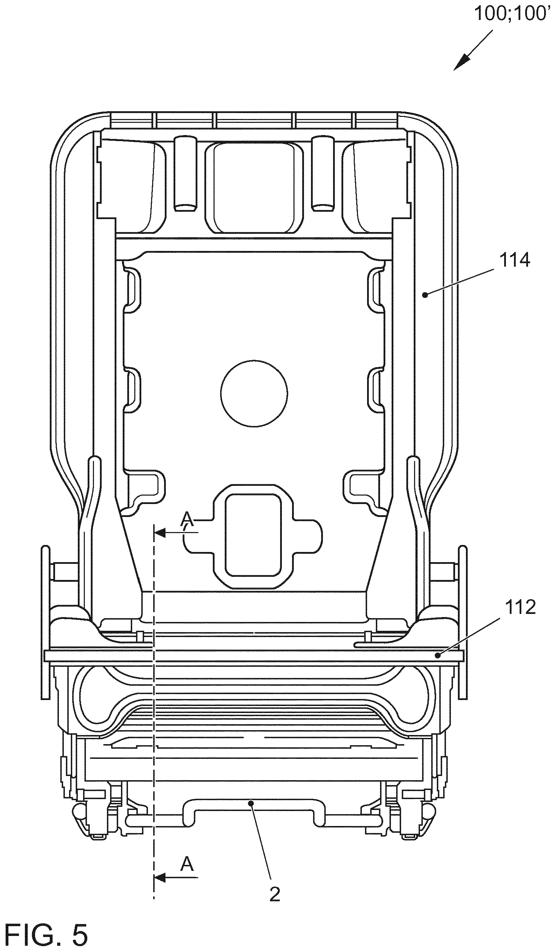

- Figur 5: den Fahrzeugsitz gemäß Figur 1 beziehungsweise Figur 3-1 in einer Vorderansicht mit Angabe der Verlaufes eines Schnittes A-A;

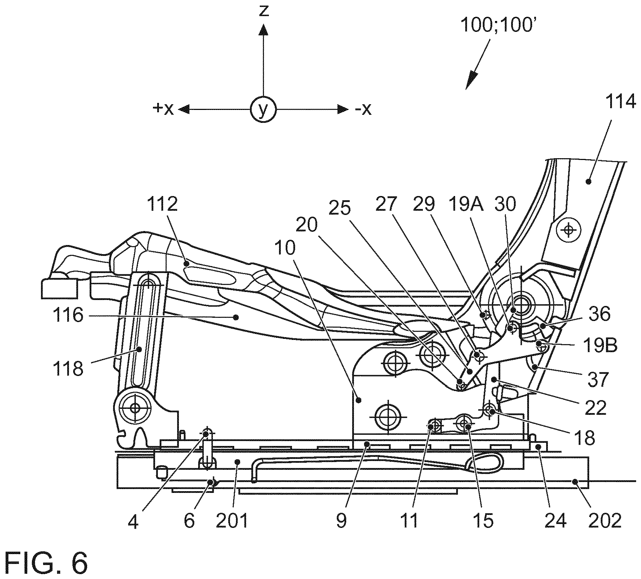

- Figur 6: den Fahrzeugsitz gemäß dem Schnitt A-A nach Figur 5;

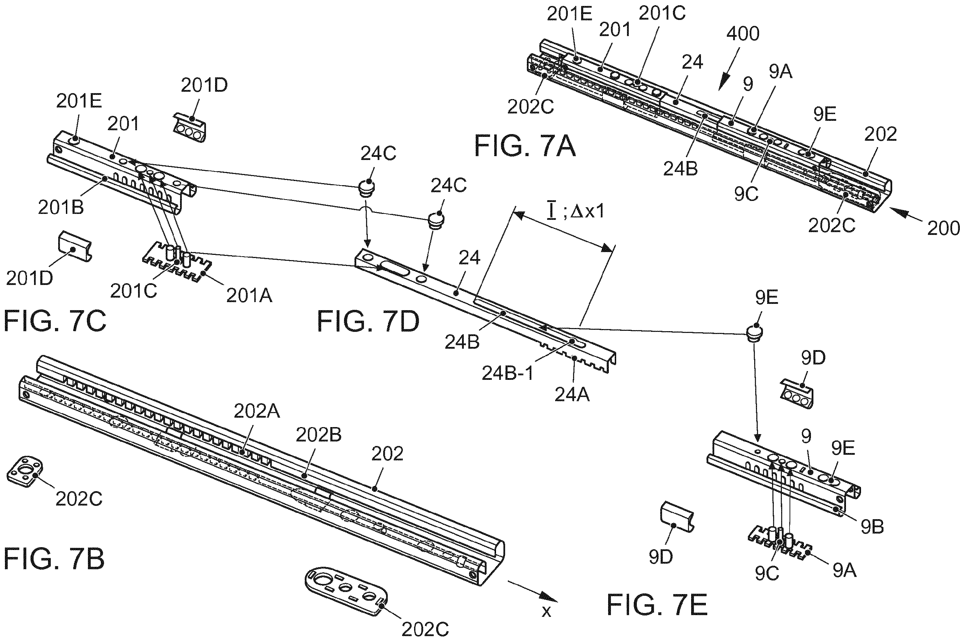

- Figur 7A: eine vergrößerte Darstellung der Sitzschiene und des Schlittens im Zusammenbauzustand in der Ausgangslage gemäß Figur 3-1A;
- Figur 7B: eine vergrößerte Darstellung einer Sitzunterschiene der Sitzschiene;
- Figur 7C: eine vergrößerte Darstellung einer Sitzoberschiene der Sitzschiene;
- Figur 7D: eine vergrößerte Darstellung eines Unterschlittens des Schlittens; und
- Figur 7E: eine vergrößerte Darstellung eines Oberschlittens des Schlittens.

Die Erfindung wird nachfolgend erläutert. Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Figur 1 zeigt einen Fahrzeugsitz 100 in einer Seitenansicht. Diese Seitenansicht des Fahrzeugsitzes 100 ist auch stellvertretend für eine geteilte oder ungeteilte Sitzbank 100' dargestellt, die ebenfalls die Ausgestaltungen und die Funktionen des nachfolgend beschriebenen Fahrzeugsitzes 100 aufweisen beziehungsweise ausführen kann.

Die nachfolgenden Erläuterungen zu dem Fahrzeugsitz 100 sind somit analog auf eine ungeteilte Sitzbank 100' insgesamt oder auf eine aus mehreren Fahrzeugsitzen 100 bestehende mehrteilige Sitzbank 100' übertragbar.

Der Fahrzeugsitz 100 umfasst ein Sitzteil 112 und ein Rückenlehnenteil 114.

Die Rückenlehnenteilstruktur des Rückenlehnenteiles 114 ist über mindestens eine Schwinge 116 mit der Sitzteilstruktur des Sitzteiles 112 verbunden.

Die mindestens eine Schwinge 116 ist einerseits drehbar über eine Schwingendrehachse y116 an der Rückenlehnenstruktur des Rückenlehnenteiles 114 angeordnet.

Die mindestens eine Schwinge 116 ist andererseits fest mit der Sitzteilstruktur des Sitzteiles 112 verbunden.

Der Fahrzeugsitz 100 weist einen Beschlag auf, der Teil eines Drehverstellers ist. Ein Beschlagteil des Beschlages ist an dem Rückenlehnenteil 114 angeordnet. Ein weiteres Beschlagteil geht in ein Seitenteil 10 über oder ist mit dem Seitenteil 10 verbunden. Das Seitenteil 10 ist erst in Figur 6 detailliert dargestellt und wird im Zusammenhang mit der Beschreibung dieser Figur 6 noch näher erläutert. Das Seitenteil 10 weist keine direkte Verbindung zum Sitzteil 112 auf.

Das rückenlehnenseitige Beschlagteil ist gegenüber dem anderen Beschlagteil verschwenkbar, so dass die Neigungsverstellung des Rückenlehnenteiles 114 gegenüber dem Sitzteil 112 durchführbar ist. Durch die Zwangskopplung des Rückenlehnenteiles 114 mit dem Sitzteil 112 über die Schwinge 116 bewegt sich das Sitzteil 112 bei der Verstellbewegung des Rückenlehnenteiles 114 stets mit.

Durch Betätigung eines nicht näher dargestellten Verstellgliedes des Drehverstellers wird das Rückenlehnenteil 114 je nach Drehbewegung des Verstellgliedes am Drehversteller zur Neigungsverstellung des Rückenlehnenteiles 114 gegenüber dem Sitzteil 112 um die Lehnendrehachse y114 drehbeweglich nach vorne und nach hinten bewegt.

### Komforteinstellung:

Der Beschlag des Fahrzeugsitzes 100 oder die Sitzbank 100' ermöglicht somit eine Komforteinstellung, bei der das Rückenlehnenteil 114 des Fahrzeugsitzes 100 zur Neigungsverstellung des Rückenlehnenteiles 114 beziehungsweise die Sitzbank 100' durch Betätigung des Verstellgliedes nach vorn +x-Richtung und nach hinten -x-Richtung schwenkbar ist.

Zumeist sind an den Beschlägen des Beschlages des Drehverstellers Anschläge vorgesehen, die den Verstellbereich des Rückenlehnenteiles 114 relativ zu dem Sitzteil 112 beidseitig begrenzen.

Theoretisch haben die Drehversteller 116 einen Verstellbereich von 360°, der aber typischerweise durch Gegebenheiten innerhalb des Fahrzeuges begrenzt wird. Zweckmäßig wird der Verstellbereich des Fahrzeugsitzes 100 beziehungsweise der Sitzbank 100' in der ersten Reihe anders gewählt als bei dem Fahrzeugsitz 100 oder der Sitzbank 100' in einer hinter der ersten Sitzreihe liegenden zweiten oder dritten Sitzreihe.

Außerdem wird oft der Verstellbereich in der jeweiligen Sitzreihe jedes Rückenlehnenteiles 114 des Fahrzeugsitzes 100 oder einer Sitzbank 100' nach vorne anders bemessen als der Verstellbereich nach hinten.

### Easy-Entry-Einstellung nach dem Stand der Technik:

Der prinzipiell beschriebene Aufbau des Beschlages ermöglicht eine Easy-Entry-Einstellung, bei der es bisher funktionell zur Entriegelung der Beschlagteile und parallel oder kurz nachfolgend zur Entriegelung einer Oberschiene 201 gegenüber einer Unterschiene 202 kommt, wobei das Rückenlehnenteil 114 in Richtung des Sitzteiles 112 in eine gewünschte Position klappbar ist und der so geklappte Fahrzeugsitz 100 insgesamt über die Sitzschienen 200 nach reversibel vorne fahrbar ist, indem die Oberschiene 201 auf der Unterschiene 202 reversibel nach vorne gleitet.

Die Easy-Entry-Einstellung wird üblicherweise durch Betätigung eines Entriegelungselementes 114A vorgenommen, wobei das Entriegelungselement 114A wegen der besseren Zugänglichkeit zumeist, wie in den Figuren dargestellt, im oberen Bereich des Rückenlehnenteiles 114 angeordnet ist.

Bei der Easy-Entry-Funktion gleitet der Fahrzeugsitz 100 beziehungsweise eine Sitzbank 100' auf der Oberschiene 201 reversibel nach vorne und sorgt je nach Ausführung der Easy-Entry-Funktion in einer ersten oder zweiten Sitzreihe für einen breiteren Einstieg in die zweite oder eine dritte Sitzreihe.

Durch die herkömmliche Easy-Entry-Funktion wird das Einsteigen für die in die zweite und/oder dritte Sitzreihe einsteigenden Personen bereits leichter gemacht. Der Fahrzeugsitz 100 oder die Sitzbank 100' lässt sich mit geringem Kraftaufwand nach vorne schieben beziehungsweise das Rückenlehnenteil 114 lässt sich leicht reversibel auf das Sitzteil 112 umklappen.

### Neue Easy-Entry-Slide-Dive-Down-Funktion:

Erfindungsgemäß wird die beschriebene bekannte Kinematik der Easy-Entry-Funktion mit der vorne beschriebenen Kinematik der Dive-Down-Funktion gekoppelt.

Neben der Kopplung dieser Funktionen wird eine weitere Verbesserung vorgenommen, die den Einstiegsbereich gegenüber dem Stand der Technik noch weiter vergrößert. Die Verbesserung liegt kurz gesagt darin, dass das Rückenlehnenteil 114 des Fahrzeugsitzes 100 in einem ersten Schritt, wie bisher bei der herkömmlichen "Easy-Entry"-Funktion gegenüber dem Sitzteil 112 geklappt wird, sich jedoch an diesen bekannten Schritt zwei reversibel in +x-Richtung (Fahrtrichtung) stattfindende Verschiebeschritte des Fahrzeugsitzes 100 anschließen.

An diesen Vorgang schließen sich jetzt jedoch zwei Verschiebungen "Slide" des Fahrzeugsitzes 100 nach vorne in Fahrtrichtung +x-Richtung an, wobei in dem ersten der beiden Verschiebeschritte der Fahrzeugsitz 100 analog der "Dive-Down"-Funktion um einen im Wesentlichen vertikalen Verstellweg Δz1 nach unten abgesenkt wird.

Die gemäß der Erfindung entwickelte Funktionalität wird insbesondere durch einen zusätzlich angeordneten Schlitten 400 auf der jeweiligen Sitzschiene 200 und weitere darauf basierende strukturelle und funktionale Änderungen realisiert. Auf die Details wird anschließend eingegangen.

Es tritt der Effekt ein, dass der Fahrzeugsitz 100 beziehungsweise die Sitzbank 100' erfindungsgemäß nicht nur nach vorne in die bekannte Easy-Entry-Position bewegt wird, sondern es findet eine reversible Verstellbewegung des Fahrzeugsitzes 100 insgesamt beziehungsweise der Sitzbank 100' in zwei Schritten (in einem zweiten und einem dritten Schritt) sehr weit nach vorne +/-x-Richtung (weiter nach vorne in +x-Richtung als im Stand der Technik) und nach unten +/-z-Richtung statt, wodurch in vorteilhafter Weise der Einstiegsbereich größer und damit der Zugang zum Innenraum des Kraftfahrzeugs gegenüber dem Stand der Technik zugänglicher, das heißt noch komfortabler wird.

Es wurde zur Realisierung der beschriebenen Funktionalität eine neue vorteilhafte Verstellkinematik entwickelt, deren Ablauf anhand der Figuren 3-1 bis 3-4 prinzipiell und anhand der Figuren 3-1A bis 3-4A sowie der Figuren 4 bis 6 detaillierter erläutert wird, wobei gleichzeitig die vorteilhaften Effekte bei der Verstellung des Fahrzeugsitzes 100 beziehungsweise der Sitzbank 100' erläutert werden.

Zur Umsetzung der Verstellkinematik ist der Fahrzeugsitz 100 beziehungsweise die Sitzbank 100' im Weiteren wie folgt ausgebildet:
Das Sitzteil 112 weist auf seiner vorderen Seite, die dem Rückenlehnenteil 114 in der normalen Gebrauchsposition des Fahrzeugsitzes 100 gegenüberliegt, mindestens einen Schwenkarm 118 auf, der an einem Ende sitzteilseitig an der Sitzteilstruktur über eine obere Schwenkachse y118a drehbar angeordnet ist. Am anderen Ende ist der Schwenkarm 118 drehbar über eine untere Schwenkachse y118b an einer Oberschiene 201 einer Sitzschiene 200 angeordnet, wobei die Sitzschiene 200 eine karosseriefeste Unterschiene 202 umfasst.

Zumeist sind zwei Schwenkarme 118 in y-Richtung nebeneinander liegend jeweils nahe der Vorderseite oder an der Vorderseite des Sitzteiles 112 angeordnet.

Der Fahrzeugsitz 100 ist auf mindestens einer Sitzschiene 200, zumeist jedoch aus einem aus zwei Sitzschienen 200 bestehenden Sitzschienenpaar längsverschieblich in +/-x-Richtung angeordnet.

Die Sitzoberschiene 201 ist gegenüber der Sitzunterschiene 202 beweglich, wobei die untere Sitzschiene 202 unbeweglich direkt an der Karosserie K oder indirekt an der Karosserie K befestigt ist.

Auf der Sitzoberschiene 201 ist der Schlitten 400 angeordnet.

Der Schlitten 400 umfasst einen Unterschlitten 24 und einen Oberschlitten 9. Diese Schlitten 24, 9 sind im Zusammenhang mit der Sitzoberschiene 201 und der Sitzunterschiene 202 in Figur 6 prinzipiell und in den Figuren 7A bis 7E im Detail dargestellt. Der Unterschlitten 24 ist mit der Oberschiene 210 der zumeist beidseitig angeordneten Sitzschienen 200 verbunden. Je Sitzoberschiene 201 des Sitzschienenpaares ist je ein Unter- und Oberschlitten 24, 9 angeordnet.

Die Figur 7A zeigt eine vergrößerte Darstellung der Sitzschiene 200 und des Schlittens 400 im Zusammenbauzustand in der Ausgangslage gemäß Figur 3-1A.

Der Oberschlitten 9 liegt auf dem Unterschlitten 24 auf, wobei erkennbar ist, dass der Oberschlitten 9 und der Unterschlitten 24 in die Sitzunterschiene 202 integriert angeordnet sind.

Das hat den Vorteil, dass der Schlitten 400 insgesamt in der Sitzunterschiene 202 sitzt und das System aus Sitzschiene 200 und Schlitten 400 eine geringe Bauhöhe aufweist, wodurch insgesamt weniger Bauraum notwendig ist, insbesondere der karosserieseitige Einstiegsbereich freigehalten wird.

In die Sitzunterschiene 202 integriert sind zudem die vorderen und hinteren Unterlegscheiben 202C gemäß Figur 7B. Der Unterschlitten 24 umfasst eine Easy-Entry-Führung in der Art einer Nut 24B mit einer Einführöffnung 24B-1 für ein Führungselement 9E. Der Unterschlitten 24 steht über das Führungselement 9E in der Art eines Führungsbolzens mit dem Oberschlitten 9 gleitend in Verbindung, wobei der Oberschlitten 9 den Unterschlitten 24 über den Führungsbolzen 9E trägt.

Figur 7B zeigt eine vergrößerte Darstellung der Sitzunterschiene 202. Die Sitzunterschiene 202 weist ferner einen nach unten offenen gebördelten Rand 202B auf.

Die Sitzunterschiene 202 umfasst eine Schienen-Rastverzahnung 202A, die im vorderen inneren Flankenbereich des gebördelten Randes 202B ausgebildet ist. In diesem Bereich wird über ein Verriegelungselement 201A der zweite Verschiebeweg Δx2 realisiert.

Figur 7C zeigt eine vergrößerte Darstellung der Sitzoberschiene 201. Die Sitzoberschiene 201 umfasst ebenfalls einen gebördelten Rand 201B, der jedoch nach oben offen ist, so dass der Rand 201B der Sitzoberschiene 201 im Zusammenbauzustand von Sitzschiene 200 und Schlitten 400 in den Rand 202B der Sitzunterschiene 202 greift.

Das Verriegelungselement 201A sitzt in der Sitzoberschiene 201, wobei die Zähne des Verriegelungselementes 201A im Zusammenbauzustand durch die seitlichen Öffnungen der Sitzoberschiene 201 geführt sind und in der Verriegelungsstellung in die Schienen-Rastverzahnung 202A der Sitzunterschiene 202 greifen.

Durch eine Bewegung des Verriegelungselementes 201A nach unten kommen die Zähne des Verriegelungselementes 201A aus dem Eingriff der Schienen-Rastverzahnung 202A, so dass die zweite Verstellbewegung II möglich ist.

Bei diesem Ausführungsbeispiel wird zur Entriegelung, anders als nachfolgend erläutert, eine Betätigung auf ein Betätigungsglied 201C des Verriegelungselementes 201A nach unten ausgeführt. Es ist gleichermaßen eine Ausgestaltung denkbar, bei der eine Betätigung nach oben erfolgt, wie nachfolgend abweichend prinzipiell erläutert ist. An dem generellen Prinzip der Verstellkinematik ändert sind dadurch nichts.

Die Oberschiene 201 weist eine Öffnung auf, über die das Betätigungsglied 201C zugänglich ist.

Das Betätigungsglied 201C des Verriegelungselementes 201A wird von zwei Führungsgliedern flankiert, die ebenfalls in Öffnungen der Sitzoberschiene 201 einstehen.

Figur 7D zeigt eine vergrößerte Darstellung des Unterschlittens 24. Zunächst wird deutlich, dass die Sitzoberschiene 201 über Verbindungselemente 24C in der Art von Nieten mit der Sitzoberschiene 201 verbunden ist. Zwischen den Nieten 24C ist eine Öffnung, die einen Zugang zu dem Betätigungsglied 201C und den beiden flankierenden Führungsgliedern erlaubt. Der Unterschlitten 24 ist im Ausführungsbeispiel in die Sitzoberschiene 201 gesteckt und fest mit der Sitzoberschiene verbunden, insbesondere über die Nieten 24C vernietet.

Der Unterschlitten 24 umfasst eine in den hinteren Seitenbereich des nach unten offenen u-förmigen Unterschlittens 24 angeordnete Schlitten-Rastverzahnung 24A.

Figur 7E zeigt eine vergrößerte Darstellung des Oberschlittens 9. Der Oberschlitten 9 umfasst ebenfalls einen gebördelten Rand 9B, der nach oben offen ist, so dass der Rand 9B des Oberschlittens 9 im Zusammenbauzustand ebenfalls in den Rand 202B der Sitzunterschiene 202 greift.

Ein Verriegelungselement 9A sitzt in dem Oberschlitten 9, wobei die Zähne des Verriegelungselementes 9A im Zusammenbauzustand von Ober- und Unterschlitten 9, 24 durch die seitlichen Öffnungen des Oberschlittens 9 geführt sind und in der Verriegelungsstellung in die Schlitten-Rastverzahnung 24A des Unterschlittens 24 greifen.

Das Verriegelungselement 9A ist analog ausgestaltet wie das Verriegelungselement 201A der Sitzoberschiene 201. Jedoch ist das Verriegelungselement 9A des Oberschlittens 9 in seiner Längserstreckung gesehen schmaler ausgebildet als das Verriegelungselement 201A der Sitzoberschiene 201, weil der Schlitten 400 in die Sitzschiene 200 integriert ist.

Durch eine Bewegung des Verriegelungselementes 9A nach unten kommen die Zähne des Verriegelungselementes 9A aus dem Eingriff der Schlitten-Rastverzahnung 24A, so dass die erste Verstellbewegung I möglich ist.

Bei diesem Ausführungsbeispiel wird zur Entriegelung, anders als nachfolgend erläutert, eine Betätigung auf ein Betätigungsglied 9C des Verriegelungselementes 201A nach unten ausgeführt. Es ist gleichermaßen eine Ausgestaltung denkbar, bei der eine Betätigung nach oben erfolgt, wie nachfolgend abweichend ebenfalls prinzipiell erläutert ist. An dem generellen Prinzip der Verstellkinematik ändert sind dadurch nichts.

Der Oberschlitten 9 weist eine Öffnung auf, über die das Betätigungsglied 9C zugänglich ist. Das Betätigungsglied 9C des Verriegelungselementes 201A wird ebenfalls von zwei Führungsgliedern flankiert, die hier in Öffnungen des Oberschlittens 9 einstehen.

Es wird deutlich, dass die Sitzoberschiene 201 mit ihrem Rand 201B und der Oberschlitten 9 mit seinem Rand 9B in vorteilhafter Weise platzsparend in der gleichen Führungsebene an dem Rand 202B der Sitzunterschiene 202 geführt sind.

Mit anderen Worten liegen die Oberseite der Sitzoberschiene 201 und die Oberseite des Oberschlittens 9 auf einer Ebene, die mit der Oberseite der Sitzunterschiene 202 abschließt, so dass in vorteilhafter Weise eine nur gering ausbauende Anordnung des Schlittens 400 in der Sitzschiene 200 geschaffen ist.

Die leichtgängige Führung des Oberschlittens 9 gegenüber der Sitzunterschiene 202 und der Sitzoberschiene 201 gegenüber Sitzunterschiene 202 erfolgt über sogenannte Kugelkäfige 9D, 201D, die zwischen den gebördelten Rändern 9B, 202B beziehungsweise 201B, 202B angeordnet sind.

Der Schwenkarm 118 wird über den Anbindungspunkt mit dem Bezugszeichen 201E mit der Sitzoberschiene 201 verbunden. Das Seitenteil 10 wird über die Anbindungspunkte mit dem Bezugszeichen 9E mit dem Oberschlitten 9 verbunden.

In Figur 6 weiter ergänzend ist auf dem Oberschlitten 9 das bereits erwähnte Seitenteil 10 angeordnet, welches wie erläutert mit dem Beschlag des Rückenlehnenteiles 114 in Verbindung steht.

Dadurch trägt das Seitenteil 10 direkt das Rückenlehnenteil 114 und indirekt den hinteren Bereich des Sitzteiles 112, da das Sitzteil 112 über die das Sitzteil 112 tragende Schwinge 116 mit dem Rückenlehnenteil 114 zwangsgekoppelt ist. Anders gesagt stützt sich das Rückenlehnenteil 114 über den Beschlag auf dem Seitenteil 10 ab, während das Sitzteil 112 im vorderen Bereich über die Schwenkarme 118 auf der Oberschiene 201 und im hinteren Bereich über die Schwinge 116 drehbar auf der Schwingendrehachse y116 am Rückenlehnenteil 114 abgestützt ist.

In der Figur 3-1 befindet sich der Fahrzeugsitz 100 beziehungsweise die Sitzbank 100' in einer Ausgangslage.

### Erster Schritt: Verstellung des Fahrzeugsitzes 100 ausgehend von Figur 3-1 zu Figur 3-2:

Zunächst wird durch die Betätigung eines Entriegelungselementes 114A die Klappung des Rückenlehnenteiles 114 vorgenommen, wobei das Entriegelungselement 114A wegen der besseren Zugänglichkeit zumeist, wie in den Figuren dargestellt, im oberen Bereich des Rückenlehnenteiles 114 angeordnet ist.

In einem ersten Schritt kommt es zur Verstellung des Rückenlehnenteiles 114 nach vorn in +x-Richtung, wobei das Sitzteil 112 durch die zwischen der Rückenlehnenteilstruktur und der Sitzteilstruktur angeordnete Schwinge 116 in +x-Richtung mitgenommen wird.

Durch die Anordnung der Schwinge 116 erfolgt in dem ersten Schritt bei der Klappung des Rückenlehnenteiles 114 nach vorn eine schwingengesteuerte zwangsweise Mitnahme des Sitzteiles 112 nach vorn in +x-Richtung.

Das Rückenlehnenteil 114 wird, wie dargestellt, beispielsweise um 32° gegenüber einer gedachten Vertikalen nach vorne in +x-Richtung geschwenkt. Es versteht sich, dass andere Schwenkwinkel realisierbar sind. Bei dieser Verstellbewegung des Rückenlehnenteiles 114 bewegt sich das Sitzteil 112 zwangsweise durch die Zwangskopplung der Schwinge 116 in +x-Richtung nach vorn. Das Sitzteil 112 wird in dem ersten Schritt über den mindestens einen Schwenkarm 118 über die obere und untere Schwenkachse y118a, y118b um eine erste Länge nach vorn in +x-Richtung verlagert. Eine Verlagerung des gesamten Fahrzeugsitzes 100 findet in diesem ersten Schritt jedoch noch nicht statt.

Nach der Durchführung des ersten Schrittes ist bereits im Schulterbereich ein erster Freiraum geschaffen, der im entsprechenden Türausschnitt das Durchreichen von Gegenständen in den Innenraum des Fahrzeuges oder aus dem Innenraum des Fahrzeuges heraus erlaubt.

### Erster Schritt bezüglich der zugehörigen Anordnung der Sitzschiene 200 und des Schlittens 400, dargestellt in den Figuren 3-1A und Figur 3-2A, bei der Verstellung des Fahrzeugsitzes 100 von Figur 3-1 zu der Figur 3-2:

Bei dem ersten Schritt befinden sich die Sitzschiene 200 und der Schlitten 400 in Ausgangslage. Eine Verstellbewegung findet im Bereich Sitzschiene 200 und Schlitten 400 nicht statt. Der Oberschlitten 9 und die Sitzoberschiene befinden sich in beiden Figuren 3-1A und 3-2A jeweils in ihrer hintersten Position.

### Zweiter Schritt:

### Verstellung des Fahrzeugsitzes 100 ausgehend von Figur 3-2 zu Figur 3-3:

In dem zweiten Schritt bewegt sich jetzt der gesamte Fahrzeugsitz 100 nach vorne. Dabei bewegt sich der Fahrzeugsitz 110 insgesamt in +x-Richtung nach vorn. Dabei wird das Sitzteil 112 über den mindestens einen Schwenkarm 118 über die obere und untere Schwenkachse y118a, y118b nach unten in Richtung der Karosserie K verlagert, um den im Wesentlichen vertikalen Verstellweg Δz1. Das heißt, das Sitzteil 112 taucht gemäß dem Pfeil P1 in Figur 3-3 gleichzeitig mit der ersten Verstellbewegung I des Fahrzeugsitzes 100 in z-Richtung nach unten "Dive-Down" ab.

Diese erste Verstellbewegung I mit paralleler Absenkung des Sitzteiles 112 findet durch Entriegelung des Oberschlittens 9 gegenüber dem Unterschlitten 24 statt. Die Entriegelung erfolgt über eine Schlittenentriegelungseinheit 500, die in Figur 6 dargestellt ist und noch erläutert wird. Das heißt, der Oberschlitten 9 fährt unter Beibehaltung der Ausgangslage des Unterschlittens 24, welcher auf der Oberschiene 201 der Sitzschiene 200 sitzt, in +x-Richtung um einen ersten Verstellweg Δx1 nach vorne.

### Zweiter Schritt bezüglich der zugehörigen Anordnung der Sitzschiene 200 und des Schlittens 400, dargestellt in den Figuren 3-2A und 3-3A, bei der Verstellung des Fahrzeugsitzes 100 von Figur 3-2 zu der Figur 3-3:

Bei dem zweiten Schritt befinden sich die Sitzschiene 200 und der Schlitten 400 in der Easy-Entry-Position. Die erste Verstellbewegung I des Oberschlittens 9 gegenüber dem Unterschlitten 24 hat stattgefunden. Das Verriegelungselement 9A wurde entriegelt, so dass die Zähne des Verriegelungselementes 9A aus der Schlitten-Rastverzahnung 24A freikommen, so dass der Oberschlitten 9 gegenüber dem Unterschlitten 24 den ersten Verstellweg Δx1 ausführen kann.

### Dritter Schritt: Verstellung des Fahrzeugsitzes 100, ausgehend von Figur 3-3 zu Figur 3-4:

In dem dritten Schritt bewegt sich der gesamte Fahrzeugsitz 100 noch weiter nach vorne. Es wird dafür gesorgt, dass der Oberschlitten 9 die Oberschiene 201 gegenüber der Unterschiene 202 entriegelt. Die Entriegelung erfolgt über eine Sitzschienenentriegelungseinheit 600.

Diese zweite Verstellbewegung II, bei der keine weitere Absenkung des Sitzteiles 112 nach unten in z-Richtung stattfindet, wird durch Entriegelung der Oberschiene 201 gegenüber der Unterschiene 202 bewirkt. Da der Unterschlitten 24 des Schlittens 400 auf der Oberschiene 201 der Sitzschiene 200 sitzt, fährt der Fahrzeugsitz 100 durch die Bewegung der Oberschiene 201 gegenüber der Unterschiene weiter in +x-Richtung um einen zweiten Verstellweg Δx2 nach vorne.

### Dritter Schritt bezüglich der zugehörigen Anordnung der Sitzschiene 200 und des Schlittens 400, dargestellt in den Figuren 3-3A und 3-4A, bei der Verstellung des Fahrzeugsitzes 100 von Figur 3-3 zu der Figur 3-4:

Bei dem dritten Schritt befinden sich die Sitzschiene 200 und der Schlitten 400 in der Easy-Entry-Position. Die zweite Verstellbewegung II hat stattgefunden. Die mit dem Unterschlitten 24 über die Verbindungselemente 24C verbundene Sitzoberschiene 201 wurde entriegelt, so dass die zweite Verstellbewegung II möglich ist, bei der Sitzoberschiene 201 und der gesamte Schlitten 400 aus Oberschlitten und Unterschlitten 9, 24 gegenüber der Sitzunterschiene 202 um den zweiten Verstellweg Δx2 nach vorne verlagert werden. Das Verriegelungselement 201A wurde entriegelt, so dass die Zähne des Verriegelungselementes 201A aus der Schienen-Rastverzahnung 202A freikommen, so dass die Sitzoberschiene 201 sowie der gesamte Schlitten 400 gegenüber der Sitzunterschiene 202 den zweiten Verstellweg Δx2 ausführen kann.

Weitere technische Details sind in den Figuren 4 bis 6 dargestellt.

Die Figur 4 zeigt mit gleichen Bezugszeichen für gleiche Bauteile eine isometrische Darstellung des Fahrzeugsitzes 100.

Die Figur 4 zeigt neu eine sogenannte Towelbar 2 des Fahrzeugsitzes 100, einen Entriegelungsbügel, der zur Entriegelung der Oberschiene 201 gegenüber der Unterschiene 202 dient. Eine Bewegung der Towelbar 2 nach oben in z-Richtung führt zur Entriegelung der Oberschiene 201, so dass der Fahrzeugsitz 100 unabhängig von der Easy-Entry-Funktion in x-Richtung reversibel verschoben werden kann.

Die Figur 5 zeigt eine Vorderansicht des Fahrzeugsitzes 10 mit gleichen Bezugszeichen für gleiche Bauteile, zur Darstellung der Lage des Schnittes A-A, der in der nachfolgenden Figur 6 gezeigt ist.

Der Schnitt A-A zeigt noch einige weitere technische Details der Erfindung.

Im Seitenteil 10 ist eine Kupplungsplatte 25 angeordnet, die drehbar auf einer in y-Richtung verlaufenden Kupplungslagerachse 27 im Seitenteil 10 gelagert ist. Dargestellt ist nur die Ausgangsposition der Kupplungsplatte 25.

Die Kupplungsplatte 25 weist an einem unteren ersten Schenkel einen Mitnahmebolzen 20 auf, an den ein nicht dargestellter Bowdenzug angreift. Durch Ziehen des Bowdenzuges wird die Kupplungsplatte 25 gemäß Figur 6 in Uhrzeigerrichtung um die Kupplungslagerachse 27 verschwenkt.

Das Ziehen des Bowdenzuges wird durchgeführt, wenn der Benutzer das Easy-Entry-Entriegelungselement 114A, dargestellt in den Figuren 1 bis 3-4, betätigt.

An einem oberen zweiten Schenkel der Kupplungsplatte 25 sitzt fest ein Kulissenelement in der Art eines Zylinderstiftes 19A, der in eine erste Kulisse 36 einer Rückenlehnenentriegelungseinheit 300 des Beschlages des Rückenlehnenteiles 114 eingreift und der den Beschlag verriegelt, so dass das Rückenlehnenteil 114 nicht klappbar ist.

Durch das Ziehen des Bowdenzuges schwenkt die Kupplungsplatte 25 entgegen der Uhrzeigerrichtung und der Zylinderstift 19A fährt aus einer nicht dargestellten Kulissenvertiefung der ersten Kulisse 36 heraus, wobei gleichzeitig der obere zweite Schenkel der Kupplungsplatte 25 den dargestellten Entriegelungsarm 30 der Rückenlehnenentriegelungseinheit 300, insbesondere eine Rondenentriegelungseinheit betätigt, wodurch die Klappung des Rückenlehnenteiles 114 ermöglicht wird, da die Beschlagteile des Beschlages des Rückenlehnenteiles 114 jetzt entriegelt sind. Der Zylinderstift 19A läuft bei der Klappung des Rückenlehnenteiles 114 in der ersten Kulisse 36.

An einem oberen dritten Schenkel der Kupplungsplatte 25 sitzt fest ein weiterer Zylinderstift 19B, der in eine zweite Kulisse 37 des Seitenteils 10 eingreift. Über diese zweite Kulisse 37 wird der beispielhaft genannte Schwenkwinkel von 32° realisiert, das heißt, der Zylinderstift 19B fährt bei der reversiblen Klappung des Rückenlehnenteiles 114 in der zweiten Kulisse 37 zwischen einem oberen und einem unteren Anschlag hin und her, wobei der untere Anschlag die Endposition des Rückenlehnenteiles 114 bei 32° gegenüber der gedachten Vertikalen bewirkt. Es wird darauf hingewiesen, dass sich der genannte Winkel von 32° als optimal herausgestellt hat. Die Erfindung ist jedoch nicht auf diesen genannten Schwenkwinkel eingeschränkt. Vielmehr können auch fahrzeugabhängig andere Schwenkwinkel definiert werden, um einen bequemen Einstieg in eine zweite oder dritte Sitzreihe zu ermöglichen.

Sobald diese Endposition erreicht ist, ist der erste bereits erläuterte Schritt abgeschlossen und das Rückenlehnenteil 114 und das Sitzteil 112 befinden sich ausgehend von der Position der Figur 3-1 in der Position gemäß Figur 3-2, die bereits beschrieben worden sind.

Bei der Klappung des Rückenlehnenteiles 114 bewegt sich ein weiteres Übertragungselement 29 in der Art eines Zylinderstiftes als Mitnahmeelement gemäß Figur 6 entgegen der Uhrzeigerrichtung und übt, sobald sich das Rückenlehnenteil 114 in der Endposition von beispielsweise 32° befindet, eine vertikale Kraft auf ein ein- oder zweiteiliges Stößelelement 22 aus.

Im Ausführungsbeispiel ist das Stößelelement 22 zweiteilig und umfasst ein im Wesentlichen vertikales und ein im Wesentlichen horizontales Stößelteil.

Das horizontale Stößelteil, welches durch ein Lager 18 auf einer in y-Richtung verlaufenden Lagerachse in dem Seitenteil 10 drehbeweglich angeordnet ist, wirkt einendseitig auf das zweite wippenartige im Wesentlichen horizontale Stößelteil, welches ebenfalls drehbeweglich durch ein Lager 15 auf einer in y-Richtung verlaufenden Lagerachse im Seitenteil 10 angeordnet ist.

Die vertikale nach unten in z-Richtung gerichtete Bewegung des vertikalen Stößelteiles bewirkt, dass sich das horizontale Stößelteil an dem Ende, welches dem Angriffspunkt des vertikalen Stößelteiles gegenüberliegt, angehoben wird. Das horizontale Stößelteil bewegt sich somit wippenartig um die in y-Richtung verlaufende Lagerachse in Uhrzeigerrichtung.

Ein dort angeordnetes Sperrelement 11 in der Art eines Sperrbolzens, welches den Oberschlitten 9 gegenüber dem Unterschlitten des Schlittens 400 verriegelt, wird angehoben und der Oberschlitten 9 verfährt, wie im zweiten Schritt bereits erläutert, in der beschriebenen ersten Verstellbewegung I mit paralleler Absenkung des Sitzteiles 112 nach vorne. Die Entriegelung erfolgt über die Schlittenentriegelungseinheit 500, die in Figur 6 als temporär angeordneter Sperrbolzen 11 innerhalb der Schlitten 9, 24 realisiert ist.

In einer anderen Ausgestaltung kommt statt des Sperrbolzens ein Ver- und Entriegelungsmechanismus 9A, 24A zum Einsatz, wie im Zusammenhang mit den Figuren 3-1A bis 3-4A und den Figuren 7A bis 7E erläutert wurde. In diesem Fall wird kein Anheben des Sperrbolzens 11 realisiert, sondern ein Absenken des Verriegelungselementes 9A gegenüber der Schlitten-Rastverzahnung 24A.

Nach der Entriegelung fährt der Oberschlitten 9 innerhalb der ersten Verstellbewegung I unter Beibehaltung der Ausgangslage des Unterschlittens 24, welcher mit der Oberschiene 201 verbunden ist und zumindest teilweise auf oder gemäß dem Ausführungsbeispiel (Figuren 3-1A bis 3-4A und Figuren 7A bis 7E) teilweise unter der Oberschiene 201 der Sitzschiene 200 sitzt, in +x-Richtung um einen ersten Verstellweg Δx1 nach vorne.

Der Sperrbolzen 11 sperrt den Oberschlitten 9 gegenüber dem Unterschlitten 24 in der Ausgangslage des Fahrzeugsitzes 100, wenn der Fahrzeugsitz 100 in die Ausgangslage gemäß Figur 1 beziehungsweise Figur 3-1 zurückkehrt.

Schließlich zeichnet sich die Verstellmechanik zur Durchführung der Verstellkinematik ferner durch ein weiteres Entriegelungselement 6 in der Art eines weiteren Zylinderstiftes aus, das mittelbar oder unmittelbar mit dem Entriegelungsbügel 2, der zur Entriegelung der Oberschiene 201 gegenüber der Unterschiene 202 dient, in Verbindung steht.

Kurz bevor der Oberschlitten 9 der ersten Verstellbewegung I in +x-Richtung nach vorne fast seine Endlage erreicht hat, wird die Sitzschienenentriegelungseinheit 600, die im Ausführungsbeispiel als Entriegelungselement 6 ausgebildet ist, betätigt und es wird die zweite Verstellbewegung II ermöglicht, bei der zwar keine weitere Absenkung des Sitzteiles 112 nach unten stattfindet, jedoch wird die Oberschiene 201 gegenüber der Unterschiene 202 beispielsweise durch den Ver- und Entriegelungsmechanismus 201A, 202A entriegelt und um den Verstellweg Δx2 weiter nach vorne bewegt.

Das Entriegelungselement 6 sorgt dafür, dass der Entriegelungsbügel 2 um seine in y-Richtung verlaufende Lagerachse 4 gedreht und angehoben wird, so dass eine Entriegelung des Ver- und Entriegelungsmechanismus 201A, 202A stattfindet.

Da der Unterschlitten 24 des Schlittens 400 auf oder unter der Oberschiene 201 der Sitzschiene 200 sitzt und fest mit der Oberschiene 201 verbunden ist, fährt der gesamte Fahrzeugsitz 100 durch die Bewegung der Oberschiene 201 gegenüber der Unterschiene 202 weiter in +x-Richtung um einen zweiten Verstellweg Δx2 nach vorne.

Aus dieser vordersten Verstelllage des Fahrzeugsitzes 100, nachdem der Fahrzeugsitz 100 über beide Verstellwege Δx1 und Δx2 verschoben worden ist, kann der Fahrzeugsitz 100 unter entsprechender Rückstellung der Komponenten der Verstellmechanik in seine ursprüngliche Ausgangslage gemäß den Figuren 1 und Figur 3-1, Figur 3-1A zurück verschoben werden.

In vorteilhafter Weise wird der Fahrzeugsitz 100 beziehungsweise die Sitzbank 100' erfindungsgemäß nicht nur nach vorne in die bekannte Easy-Entry-Position bewegt, sondern es findet eine reversible Bewegung des Fahrzeugsitzes 100 beziehungsweise der Sitzbank 100' in zwei Schritten (zwei Verstellbewegungen Δx1 + Δx2) sehr weit nach vorne in +/-x-Richtung und während der ersten Verstellbewegung I; Δx1 findet auch eine Versenkbewegung des Sitzteiles 112 und des Rückenlehnenteiles 114 um den vertikalen Verstellweg Δz1 nach unten in +/-z-Richtung statt, wodurch in vorteilhafter Weise der Einstiegsbereich durch die "Easy-Entry-Slide-Dive-Down"-Kinematik größer und damit die Zugänglichkeit zum Innenraum in die zweite oder dritte Sitzreihe wesentlich verbessert wird.

### Bezugszeichenliste

- 100: Fahrzeugsitz
- 100': Sitzbank
- 112: Sitzteil
- 114: Rückenlehnenteil
- y114: Lehnendrehachse
- 114A: Entriegelungselement
- 116: Schwinge
- y116: Schwingendrehachse
- 118: Schwenkarm
- y118a: obere Schwenkachse
- y118b: untere Schwenkachse
- 200: Sitzschiene
- 201: Oberschiene
- 201A: Verriegelungselement
- 201B: Rand
- 201C: Betätigungsglied
- 202: Unterschiene
- 202A: Schienen-Rastverzahnung
- 202B: Rand
- 202C: Unterlegscheiben
- 300: Rückenlehnenentriegelungseinheit
- 2: Entriegelungsbügel
- 4: Lagerachse
- 6: Entriegelungselement
- 9: Oberschlitten des Schlittens
- 9A: Verriegelungselement
- 9B: Rand
- 9C: Betätigungsglied
- 10: Seitenteil
- 11: Sperrelement
- 15: Lager
- 18: Lager
- 19A: Zylinderstift
- 19B: Zylinderstift
- 20: Mitnahmebolzen
- 22: Stößelelement
- 24: Unterschlitten des Schlittens
- 24A: Schlitten-Rastverzahnung
- 24B: Easy-Entry-Führung
- 24B-1: Einführöffnung
- 24C: Verbindungselemente
- 25: Kupplungsplatte
- 27: Kupplungslagerachse
- 29: Übertragungselement
- 30: Entriegelungsarm
- 36: erste Kulisse
- 37: zweite Kulisse
- 400: Schlitten
- 500: Schlittenentriegelungseinheit
- 600: Sitzschienenentriegelungseinheit
- K: Karosserie
- +x: Richtung in der üblichen Fahrtrichtung eines Fahrzeugs
- -x: Richtung entgegen der üblichen Fahrtrichtung +x
- y: Richtung in der Horizontalen quer zur x-Richtung
- z: Richtung in der Vertikalen quer zur x-Richtung
- I: erste Verstellbewegung
- Δx1: erster Verstellweg in x-Richtung
- II: zweite Verstellbewegung
- Δx2: zweiter Verstellweg in x-Richtung
- P1: Absenkung des Sitzteiles 112 in z-Richtung nach unten
- Δz112: Versenkbewegung des Sitzteiles 112 in z-Richtung

## Patentansprüche

1. Fahrzeugsitz (100) oder Fahrzeugsitz (100) innerhalb einer mehrteiligen Sitzbank (100') mit einem Easy-Entry-Verstellmechanismus oder eine ungeteilte Sitzbank (100') mit dem Easy-Entry-Verstellmechanismus, wobei das Rückenlehnenteil (114) des Fahrzeugsitzes oder der Sitzbank (100, 100') zur Durchführung eines ersten Schrittes eine Rückenlehnenentriegelungseinheit (300) aufweist, durch die das Rückenlehnenteil (114) des Fahrzeugsitzes oder der Sitzbank (100, 100') entriegelbar ist und gegenüber dem Sitzteil (112) des Fahrzeugsitzes oder der Sitzbank (100, 100') in eine vorgebbare dem Sitzteil (112) näher kommende Klappstellung bringbar ist, **dadurch gekennzeichnet, dass** die Rückenlehnenentriegelungseinheit (300) zur Durchführung eines zweiten Schrittes, bei dem eine erste Verstellbewegung (I) des Fahrzeugsitzes oder der Sitzbank (100, 100') durchgeführt wird, in Klappstellung des Fahrzeugsitzes oder der Sitzbank (100, 100') entriegelnd auf eine Schlittenentriegelungseinheit (500) eines den Fahrzeugsitz oder die Sitzbank (100, 100') tragenden Schlittens (400) einwirkt, so dass der Fahrzeugsitz oder die Sitzbank (100, 100') durch den Schlitten (400) um einen ersten Verstellweg (Δx1) horizontal verschoben und das Sitzteil (112) über mindestens einen im vorderen Bereich des Sitzteiles (112) angeordneten Schwenkarm (118) innerhalb der ersten Verstellbewegung (I) jeweils um einen vorgebbaren vertikalen Verstellweg (Δz112) vertikal nach unten bewegt wird, wobei der Schlitten (400) anschließend auf eine Sitzschienenentriegelungseinheit (600) einer den Schlitten (400) tragenden Sitzschiene (200) entriegelnd einwirkt, so dass der Fahrzeugsitz oder die Sitzbank (100, 100') auf der Sitzschiene (200) in einem dritten Schritt nach der ersten Verstellbewegung (I) in einer zweiten Verstellbewegung (II) gleichgerichtet um einen weiteren horizontalen zweiten Verstellweg (Δx2) weiter bewegbar ist.

2. Fahrzeugsitz (100) oder Sitzbank (100, 100') nach Anspruch 1, **dadurch gekennzeichnet, dass** die Verstellbewegung des Rückenlehnenteiles (114) in dem ersten Schritt reversibel durch eine zwischen dem Rückenlehnenteil (114) und dem Sitzteil (112) angeordnete Schwinge (116) direkt auf das Sitzteil (112) zwangsgekoppelt übertragbar ist.

3. Fahrzeugsitz (100) oder Sitzbank (100, 100') nach Anspruch 1, **dadurch gekennzeichnet, dass** sich das Rückenlehnenteil (114) über einen das Rückenlehnenteil (114) mit einem Seitenteil (10) verbindenden Beschlag über das Seitenteil (10) auf dem Schlitten (400) abstützt.

4. Fahrzeugsitz (100) oder Sitzbank (100, 100') nach Anspruch 3, **dadurch gekennzeichnet, dass** an dem Seitenteil (10) auf einer Kupplungslagerachse (27) drehbar eine Kupplungsplatte (25) angeordnet ist, die in dem ersten Schritt durch Betätigung eines Easy-Entry-Entriegelungselementes (114A) über einen Bowdenzug eine Entriegelung des Rückenlehnenteiles (114) über eine Entriegelungseinheit (300) bewirkt, so dass das Rückenlehnenteil (114) in Klappstellung bringbar ist, wobei die Kupplungsplatte (25) des Rückenlehnenteiles (114) mittels eines Kulissenelementes (19A), welches in eine erste Kulisse (36) des rückenlehnenseitigen Beschlagteiles eingreift, geführt und gesichert ist, und mittels eines zweiten Kulissenelementes (19B), welches in eine zweite Kulisse (37) eingreift, hinsichtlich des vorgebbaren Schwenkwinkels des Rückenlehnenteiles (114) für eine Begrenzung sorgt.

5. Fahrzeugsitz (100) oder Sitzbank (100, 100') nach Anspruch 3, **dadurch gekennzeichnet, dass** an dem Seitenteil (10) ein einteiliges oder mehrteiliges Stößelelement (22) angeordnet ist, welches bei Erreichen der Klappstellung des Rückenlehnenteiles (114) nach dem ersten Schritt von einem an dem Rückenlehnenteil (114) angeordneten Übertragungselement (29) derart verlagert wird, dass das Stößelelement (22) ein Sperrelement (11) einer Schlittenentriegelungseinheit (500) entriegelt, wodurch ein Oberschlitten (9) gegenüber einem Unterschlitten (24) in dem zweiten Schritt um den ersten Verstellweg (Δx1) verfahrbar und der Fahrzeugsitz oder die Sitzbank (100, 100') horizontal verschiebbar ist.

6. Fahrzeugsitz (100) oder Sitzbank (100, 100') nach Anspruch 3, **dadurch gekennzeichnet, dass** im vorderen Bereich einer Sitzschiene (200) ein Entriegelungselement (6) angeordnet ist, welches mittelbar oder unmittelbar an einem Entriegelungsbügel (2) einer Sitzschienenentriegelungseinheit (600) angreift, wobei der Oberschlitten (9) im Wesentlichen am Ende der zweiten horizontalen Verstellbewegung in seiner im Wesentlichen vordersten Position an dem Entriegelungselement (6) anstößt und durch Betätigung des Entriegelungsbügels (2) eine Entriegelung einer Sitzoberschiene (201) gegenüber einer Sitzunterschiene (202) bewirkt, so dass die mit dem Unterschlitten (24) verbundene Sitzoberschiene (201) gegenüber einer karosseriefesten Sitzunterschiene (202) der Sitzschiene (200) in dem dritten Schritt um den zweiten Verstellweg (Δx2) verfahrbar und der Fahrzeugsitz oder die Sitzbank (100, 100') horizontal weiter verschiebbar ist.

7. Fahrzeugsitz (100) oder Sitzbank (100, 100') nach Anspruch 1, **dadurch gekennzeichnet, dass** der Schlitten (400) in die Sitzschiene (200) integriert ist, wobei die Oberseite der Sitzoberschiene (201) und die Oberseite des auf dem Unterschlitten (24) angeordneten Oberschlittens (9) innerhalb der Sitzunterschiene (202) in einer Ebene angeordnet sind.

## Claims

1. A vehicle seat (100) or vehicle seat (100) within a multi-part bench seat (100') with an easy-entry adjustment mechanism or an undivided bench seat (100') with the easy-entry adjustment mechanism, wherein the backrest part (114) of the vehicle seat or the bench seat (100, 100') has for carrying out a first step a backrest unlocking device (300) with which the backrest part (114) of the vehicle seat or of the bench seat (100, 100') can be unlocked and brought with respect to the seat part (112) of the vehicle seat or the bench seat (100, 100') into a pre-settable folding position that comes closer to the seat part (112), **characterised in that** the backrest unlocking device (300) acts for carrying out a second step, where a first adjusting movement (I) of the vehicle seat or the bench seat (100, 100') is carried out, in folding position of the vehicle seat or the bench seat (100, 100') in an unlocking manner on a slide unlocking device (500) of a slide (400) supporting the vehicle seat or the bench seat (100, 100') so that the vehicle seat or the bench seat (100, 100') is moved horizontally by the slide (400) about a first adjustment path (Δx1), and the seat part (112) is moved downward within the first adjustment movement (I) by at least one pivot arm (118) arranged in the front region of the seat part (112) about a pre-settable vertical adjustment path (Δz112), respectively, wherein the slide (400) subsequently acts in an unlocking manner on a seat rail unlocking device (600) of a seat rail (200) supporting the slide (400) so that the vehicle seat or the bench seat (100, 100') is further moveable on the seat rail (200) in a third step after the first adjustment movement (I) in a second adjustment movement (II) in the same direction by a further horizontal second adjustment path (Δx2).

2. The vehicle seat (100) or bench seat (100, 100') according to claim 1, **characterised in that** the adjustment movement of the backrest part (114) can be transmitted directly on the seat part (112) in a permanently coupled manner in the first step reversibly by a swing arm (116) arranged between the backrest part (114) and the seat part (112).

3. The vehicle seat (100) or bench seat (100, 100') according to claim 1, **characterised in that** the backrest part (114) supports itself on the slide (400) via the side part (10) through a fitting connecting the backrest part (114) with the side part (10).

4. The vehicle seat (100) or bench seat (100, 100') according to claim 3, **characterised in that** a coupling plate (25), which is arranged at the side part (10) rotatably on a coupling bearing axis (27), causes in the first step by actuating an easy-entry unlocking element (114A) via a Bowden cable for the backrest part (114) to be unlocked via an unlocking device (300) so that the backrest part (114) can be brought into folding position, wherein the coupling plate (25) of the backrest part (114) is guided and secured by means of a connecting link element (19A), which engages with a first connecting link (36) of the backrest-side fitting part, and by means of a second connecting link element (19B), which engages with a second connecting link (37) providing for a restriction with regard to the pre-settable swivel angle of the backrest part (114).

5. The vehicle seat (100) or bench seat (100, 100') according to claim 3, **characterised in that** arranged on the side part (10) is a one-piece or multi-piece pusher element (22), which is upon reaching the folding position of the backrest part (114) after the first step moved by a transmission element (29) arranged on the backrest part (114) in such a way that the pusher element (22) unlocks a blocking element (11) of a slide unlocking device (500), as a result of which a top slide (9) is movable relative to a base slide (24) in the second step about the first adjustment path (Δx1) and the vehicle seat or the bench seat (100, 100') is horizontally slidable.

6. The vehicle seat (100) or bench seat (100, 100') according to claim 3, **characterised in that** arranged in the front region of a seat rail (200) is an unlocking element (6), which directly or indirectly engages an unlocking bracket (2) of a seat rail unlocking device (600), wherein the top slide (9) essentially abuts at the end of the second horizontal adjustment movement in its essentially foremost position against the unlocking element (6) and causes by actuating the unlocking bracket (2) for a seat top rail (201) to be unlocked with respect to a seat base rail (202) so that the seat top rail (201) connected with the base slide (24) is movable with respect to a body-mounted seat base rail (202) of the seat rail (200) in the third step about the second adjustment path (Δx2) and the vehicle seat or the bench seat (100, 100') is horizontally further slidable.

7. The vehicle seat (100) or bench seat (100, 100') according to claim 1, **characterised in that** the slide (400) is integrated in the seat rail (200), wherein the top side of the seat top rail (201) and the top side of the top slide (9) arranged on the base slide (24) are arranged within the seat base rail (202) in one plane.

## Revendications

1. Siège de véhicule (100) ou siège de véhicule (100) à l'intérieur d'une banquette en plusieurs parties (100') avec un mécanisme de réglage easy entry ou une banquette indivisible (100') avec le mécanisme de réglage easy entry, dans lequel la partie de dossier (114) du siège de véhicule ou de la banquette (100, 100') pour effectuer une première étape comporte une unité de déverrouillage du dossier (300) à travers laquelle la partie de dossier (114) du siège de véhicule ou de la banquette (100, 100') peut être déverrouillée et peut être amenée dans une position rabattue prédéfinissable se rapprochant de la partie de siège (112) par rapport à la partie de siège (112) du siège de véhicule ou de la banquette (100, 100'), **caractérisé en ce que** l'unité de déverrouillage du dossier (300) pour effectuer une deuxième étape, dans laquelle un premier mouvement de réglage (I) du siège de véhicule ou de la banquette (100, 100') s'effectue, en position rabattue du siège de véhicule ou de la banquette (100, 100') agit de façon déverrouillante sur une unité de déverrouillage du coulisseau (500) d'un coulisseau (400) portant le siège de véhicule ou la banquette (100, 100'), de sorte que le siège de véhicule ou la banquette (100, 100') soit déplacé horizontalement par le coulisseau (400) pour un premier chemin de réglage (Δx1) et la partie de siège (112) par l'intermédiaire d'au moins un bras pivotant (118) agencé dans la région avant de la partie de siège (112) à l'intérieur du premier mouvement de réglage (I) soit déplacé respectivement pour un premier chemin de réglage vertical prédéfinissable (Δz112) verticalement vers le bas, dans lequel le coulisseau (400) agit ensuite de manière déverrouillante sur une unité de déverrouillage du rail de siège (600) d'un rail de siège (200) portant le coulisseau (400), de sorte que le siège de véhicule ou la banquette (100, 100') sur le rail de siège (200) puisse, dans une troisième étape après le premier mouvement de réglage (I), dans un deuxième mouvement de réglage (II), être déplacé ultérieurement dans la même direction pour un deuxième chemin de réglage horizontal supplémentaire (Δx2).

2. Siège de véhicule (100) ou banquette (100, 100') selon la revendication 1, **caractérisé en ce que** le mouvement de réglage de la partie de dossier (114) peut être transféré de manière rigidement accouplée directement sur la partie de siège (112) dans la première étape de manière réversible au moyen d'une bascule (116) agencée entre la partie de dossier (114) et la partie de siège (112).

3. Siège de véhicule (100) ou banquette (100, 100') selon la revendication 1, **caractérisé en ce que** la partie de dossier (114) est supportée sur le coulisseau (400) par un raccord reliant la partie de dossier (114) à une partie latérale (10) via la partie latérale (10).

4. Siège de véhicule (100) ou banquette (100, 100') selon la revendication 3, **caractérisé en ce que** une plaque de couplage (25) est agencée de manière rotative en correspondance de la partie latérale (10) sur un axe de support de couplage (27), qui, dans la première étape, en actionnant un élément de déverrouillage easy entry (114A) par l'intermédiaire d'un câble Bowden, cause un déverrouillage de la partie de dossier (114) par une unité de déverrouillage (300) de sorte que la partie de dossier (114) puisse être amenée en position rabattue, la plaque d'accouplement (25) de la partie de dossier (114) étant guidée et fixée au moyen d'un élément de coulisse (19A) qui s'engage dans une première coulisse (36) de la partie de raccord du côté du dossier, et au moyen d'un deuxième élément de coulisse (19B) qui s'engage dans une deuxième coulisse (37), fournissant une limitation par rapport à l'angle de pivotement prédéfinissable de la partie de dossier (114).

5. Siège de véhicule (100) ou banquette (100, 100') selon la revendication 3, **caractérisé en ce que** un élément poussoir (22) en une ou plusieurs parties est agencé en correspondance de la partie latérale (10) qui, lorsque la position rabattue de la partie dossier (114) est atteinte après la première étape, est transféré par un élément de transfert (29) agencé sur la partie de dossier (114) de telle sorte que l'élément poussoir (22) déverrouille un élément de blocage (11) d'une unité de déverrouillage du coulisseau (500), moyennant quoi un coulisseau supérieur (9) est mobile par rapport à un coulisseau inférieur (24) dans la deuxième étape pour le premier chemin de réglage (Δx1) et le siège de véhicule ou la banquette (100, 100') est déplaçable horizontalement.

6. Siège de véhicule (100) ou banquette (100, 100') selon la revendication 3, **caractérisé en ce que** dans la zone avant d'un rail de siège (200) est agencé un élément de déverrouillage (6) qui s'engage directement ou indirectement en correspondance d'un étrier de déverrouillage (2) d'une unité de déverrouillage de rail de siège (600), dans lequel le coulisseau supérieur (9) essentiellement à la fin du deuxième mouvement horizontal de réglage dans sa position essentiellement plus en avant aboute en correspondance de l'élément de déverrouillage (6) et en actionnant l'étrier de déverrouillage (2) provoque un déverrouillage d'un rail supérieur de siège (201) par rapport à un rail inférieur de siège (202), de sorte que, dans la troisième étape, le rail supérieur de siège (201) relié au coulisseau inférieur (24) soit mobile pour le deuxième chemin de réglage (Δx2) par rapport à un rail inférieur de siège (202) du rail de siège (200) qui est fixé à la carrosserie, et le siège de véhicule ou la banquette (100, 100') puisse être déplacé ultérieurement horizontalement.

7. Siège de véhicule (100) ou banquette (100, 100') selon la revendication 1, **caractérisé en ce que** le coulisseau (400) est intégré dans le rail de siège (200), le côté supérieur du rail supérieur de siège (201) et le côté supérieur du coulisseau supérieur (9) agencé sur le coulisseau inférieur (24) sont agencés à l'intérieur du rail inférieur de siège (202) dans un plan.
